Europäisches Patentamt

European Patent Office

Office européen des brevets

(19)

(11) Publication number: 0 387 662
A2

# (12) EUROPEAN PATENT APPLICATION

(21) Application number: 90104250.7

(22) Date of filing: 06.03.90

(51) Int. Cl.5: C08G 61/08, C08L 65/00,
//(C08L65/00,21:00,27:12)

(30) Priority: 06.03.89 JP 51969/89

(43) Date of publication of application:
19.09.90 Bulletin 90/38

(84) Designated Contracting States:
BE DE FR GB IT NL SE

(71) Applicant: NIPPON ZEON CO., LTD.
6-1, Marunouchi 2-chome
Chiyoda-ku Tokyo 100(JP)

(72) Inventor: Toshima, Kazunori
1-823, 1-333 Futatsuya
Kitamoto-shi, Saitama(JP)
Inventor: Ueno, Susumu
34-22-312 Akazutsumi, 3-chome
Setagaya-ku, Tokyo(JP)
Inventor: Okumura, Kin-ichi
1-301, 2-26 Kajiwara
Kamakura-shi, Kanagawa(JP)
Inventor: Yamato, Motoyuki
2-232, 2-21, Ooiso-cho
Naka-gum, Kanagawa(JP)

(74) Representative: von Kreisler, Alek,
Dipl.-Chem. et al
Patentanwälte Von Kreisler-Selting-Werner
Deichmannhaus am Hauptbahnhof
D-5000 Köln 1(DE)

(54) Polynorbornene machinable stock and machined product.

(57) Machinable and machined polymeric pore-free product obtained by ring opening polymerization of a norbornene monomer by means of a metathesis catalyst system containing antioxidant, butadiene-based elastomer, and an anti-friction agent which product has improved physical properties.

EP 0 387 662 A2

## Polynorbornene Machinable Stock And Machined Product

### Reference To Related Application

This application is related to patent application S.N. 242,842 entitled "Process For Preparing Shaped Article Having Thick Section" which was filed September 12, 1988.

### Background of Invention

This invention concerns a machinable stock consisting of a thermosetting norbomene polymer and a machined product. More specifically, it concerns a machinable stock with excellent cutting ability, slidability, impact strength, and dimensional stability, and a machined product.

There is a technology which is already publicly known by means of which machinable stock such as bars, plates, tubes, and sheets is made from engineering plastics such as polyimide resins, aromatic polyamide resins, polyacetal resins, ultra-high molecular weight polyethylene, polybutylene terephthalate, or polycarbonate resins, etc., and this is made into various kinds of machine parts by performing machining, such as cutting, in the same manner as with metals.

However, conventional engineering plastics, while they have excellent heat resistance and mechanical strength, etc., are thermoplastic resins, so that, due to the frictional heat produced when they are machined or cut, their temperatures rise to close to their melting points, the stock melts, and a smooth surface is difficult to obtain. Therefore, they have the drawback that the cutting surface must be cooled. Moreover, since the machinable stock is molded by injection molding, it is difficult to make large parts, and the molds must be expensive, so that there are limits to the molding. Among the conventional methods, so-called cast method nylon has the advantage that larger products can be made than with conventional injection or extrusion molding, since the monomer flows directly into the mold in which it is polymerized and molded. However, since it has inferior water absorption resistance, it has the drawback that its dimensional stability, which is an extremely important property for cuttable stock, is insufficient.

The inventors have discovered that bulk ring-opening polymers made of polycyclic norbornene monomers such as dicyclopentadiene or cyclopentadiene trimers, etc., are useful as new materials in which these drawbacks of the conventional technology are improved, as disclosed in the Japanese Patent Application No. 63-188161, US S.N. 07/242,829. Since this material is of the thermosetting type, it can be easily cut, compared to conventional thermoplastic resins, and it is light-weigh, as well as having excellent heat resistance and dimensional stability, etc. However, this material had the problems of chipping on the edges when cut and a deleterious effect on the working environment due to flying cutting dust, as well as insufficient slidability when used as sliding parts, such as gears, and insufficient impact strength.

Therefore, the inventors performed careful research with the objective of solving these problems which arose when polycyclic norbornene polymers were used. As a result, they discovered that it is useful, when polycyclic norbornene monomers are polymerized by bulk ring opening, to use a specific elastomer and a slidability-imparting agent. Based on this finding, they perfected this invention.

### Summary of Invention

The essential nature of this invention is that it is a substantially pore-free machinable thermosetting stock, obtained by subjecting a norbornene monomer of tricyclic or higher cyclic structure to bulk ring-opening polymerization in the presence of an antioxidant, a butadiene-based elastomer, and a slidability-imparting agent, said stock having an ignition point of at least 120° C, a glass transition point of at least 80° C, a coefficient of dynamic friction not greater than 0.2, and an Izod impact strength of at least 5 kg•cm/cm.

### Detailed Description of Invention

This invention is directed to a pore-free machinable thermosetting stock and to a machined article made from such stock. The stock is prepared by polymerizing a norbornene monomer in the presence of an antioxidant, a butadiene-containing elastomer, and an anti-friction agent by means of a metathesis ring-opening polymerization catalyst system. The stock has improved external appearance, is substantially free of pores, does not chip during cutting, does not produce cutting dust when it is cut, has a high Tg exceeding 150°C, and has a low coefficient of friction.

The monomer used as the raw material for the machinable stock in this invention is a norbornene monomer with a tricyclic or higher cyclic structure. Because it has a tricyclic or higher cyclic structure, a polymer with a high thermal deformation temperature is obtained, and the heat resistance is sufficient for machining.

Moreover, in this invention it is necessary for the polymer produced to be of the thermosetting type; therefore, at least 10 weight percent, and preferably at least 30 weight percent, of the total monomer should be a crosslinkable monomer. Because the polymer is of the thermosetting type, melting due to the heat of friction during cutting can be prevented, and its cuttability is markedly improved.

As norbornene monomers with tricyclic or higher cyclic structures one can use tricyclic ones, such as dicyclopentadiene and dihydrodicyclopentadiene, tetracyclic ones such as teracyclododecene, pentacyclic ones such as tricyclopentadiene, heptacyclic ones such as tetracyclopentadiene, alkyl-substituted derivatives of these such as methyl-, ethyl-, propyl-, butyl-, etc. substituted ones, alkylidene-substituted derivatives such as ethylidene-substituted ones, or aryl-substituted derivatives such as phenyl-, tolyl-, etc. substituted ones.

On the other hand, the crosslinkable monomer is a polycyclic norbornene monomer with two or more reactive double bonds; examples of such monomers are dicyclopentadiene, tricyclopentadiene, tetracyclopentadiene, etc. Consequently, when the norbornene monomer and the crosslinkable monomer are the same, it is not necessary to use another crosslinkable monomer.

These norbornene monomers can be used individually or in mixtures of two or more.

The norbornene monomers with tricyclic or higher cyclic structures can be obtained by heat-treating dicyclopentadienes. The heat treatment conditions are as follows: the dicyclopentadiene is heated in an inert gas atmosphere at a temperature of 120-250°C for 0.5-20 hours. By means of this heat treatment, a monomer mixture containing tricyclopentadiene and unreacted dicyclopentadiene is obtained. During the heat treatment, suitable dienophils such as dicyclic norbornenes, styrenes, unsaturated carboxylic acid esters, unsaturated nitriles, etc., may also be present.

Furthermore, in addition to one or more of the aforementioned norbornene monomers with tricyclic or higher cyclic structures, any of the following compounds which can undergo ring opening polymerization may also be used, within ranges which do not hinder the purpose of this invention: dicyclic norbornene monomers such as 2-norbornene, 5-methyl-2-norbornene, 5-ethylidene-2-norbornene, 5-phenyl-2-norbornene, etc., or monocyclic cycloolefins such as cyclobutene, cyclopentene, cyclopentadiene, cyclooctene, cyclododecene, etc.

The catalyst used in this invention may be any publicly known metathesis catalyst which can serve as a bulk polymerization catalyst for norbornene monomers, such as are disclosed in Japanese unexamined patent publications 58-127728, 58-129013, 59-51911, 60-79035, 60-186511 and 61-126115.

As metathesis catalysts, one can use halides, oxyhalides, oxides, or organic ammonium salts etc. of tungsten, molybdenum, tantalum, etc. Suitable examples are tungsten compounds such as tungsten hexachloride, tungsten oxytetrachloride, tungsten oxide, tridodecyl ammonium tungstate, methyltricapryl ammonium tungstate, tri(tridecyl) ammonium tungstate, trioctyl ammonium tungstate, etc.; molybdenum compounds such as molybdenum pentachloride, molybdenum oxytrichloride, tridodecyl ammonium molybdate, methyltricapryl ammonium molybdate, tri(tridecyl) ammonium molybdate, trioctyl ammonium molybdate, etc.; or tantalum compounds such as tantalum pentachloride. Among these, it is preferable to use catalysts which are soluble in the norbornene monomer used in the reaction. From this point of view, organic ammonium slats are commonly used. When the catalyst is a halide, it can be made soluble by treating it beforehand with an alcohol compound or a phenol compound. Moreover, if desired, one can also use Lewis salt groups such as benzonitrile, tetrahydrofuran, etc., and chelating agents such as acetylacetone, alkyl acetoacetates, etc.; by means of these, premature polymerization can be prevented.

As activation agents or cocatalysts, one can use alkyl aluminum halides, alkoxyalkyl aluminum halides, aryloxyalkyl aluminum halides, organotin compounds, etc. Suitable examples include ethyl aluminum dichloride, diethyl aluminum monochloride, ethyl aluminum sesquichloride, diethyl aluminum iodide, ethyl aluminum diiodide, propyl aluminum dichloride, propyl aluminum diiodide, isobutyl aluminum dichloride, ethyl aluminum dibromide, methyl aluminum sesquichloride, methyl aluminum sesquibromide, tetrabutyl tin, preliminary reaction products of alkyl aluminum halides and alcohols, etc.

3

Among these activating agents, alkoxyalkyl aluminum halides and aryloxyalkyl aluminum halides are advantageous from the point of view of workability since they have suitable pot lives at room temperature even when the catalyst ingredients are mixed together, as disclosed in the Japanese unexamined patent publication 59-51911. In the case of alkyl aluminum halides, there is the problem that polymerization begins immediately when the catalyst is mixed in, but in this case the beginning of the polymerization can be delayed by using regulating agents, such as ethers, esters, ketones, nitriles, alcohols, etc., with the activating agent, as disclosed in Japanese unexamined patent publications 58-129013 and 61-120814. If such regulating agents are not used, it is necessary to take care concerning the apparatus an operations, so that even materials with short pot lives can be used. However, in the case of catalyst systems with short pot lives, it is difficult to remove the reaction heat rapidly, since the reaction proceeds rapidly; hence, one should use ones with pot lives at 25°C or 5 minutes or longer, preferably 10 minutes or longer, and still more preferably 30 minutes or longer.

Moreover, in addition to the catalyst and active agents, one may also use halogenated hydrocarbons such as chloroform, carbon tetrachloride, hexachlorocyclopentadiene, etc. disclosed in the Japanese unexamined patent publication 60-79035. Furthermore, one may also use a halogen source such as tin tetrachloride, silicon tetrachloride, magnesium chloride, germanium chloride, etc., in addition, as disclosed in the Japanese unexamined patent publication 63-186730. Amount of the halogen source is 0.05 to 10 millimoles, preferably 0.1 to 2 millimoles, per mole of the norbornene monomer.

The metathesis catalyst is ordinarily used in the range of approximately 0.01-50 millimoles, preferably 0.1-10 millimoles, per mole of the norbornene monomers. The activating agent or cocatalyst is ordinarily used in the molar ratio range of 0.1-200, preferably 2-10, with respect to the catalyst ingredient.

The metathesis catalyst and activating agent should both be used by dissolving them in the monomer, but they may also be suspended or dissolved in a small quantity of solvent, within a range which does not essentially harm the properties of the product.

The antioxidant used in this invention may be one of various phenol, phosphorus, amine, etc. plastic and rubber antioxidants. These antioxidants may be used individually or in combination. The proportions in which they are compounded are within a range such that the ignition point of the norbornene polymer is 120°C or higher, preferable 130°C or higher; ordinarily, this is 0.5 weight percent or more, preferably 1-3 weight percent, of the norbornene polymer. If the proportion of the antioxidant is extremely small, the ignition point of the product cannot be raised. There is no particular upper limit for the proportion of the antioxidant, but it is undesirable for it to be extremely high, since this is uneconomical and hinders the polymerization. In particular, amine antioxidants are found to hinder the polymerization reaction when used at 2 weight percent or more; therefore, they should be used in the range of 0.5-2 weight percent.

As phenol antioxidants, one can use, for example, 4,4-dioxydiphenyl, hydroquinone-monobenzyl ether, 2,4-dimethyl-6-t-butyl phenol, 2,6-di-t-butyl phenyl, 2,6-di-amylhydroquinone, 2,6-di-t-butyl-p-cresol, 4-hydroxymethyl-2,6-di-t-butyl phenol, 4,4′-methylene-bis-(6-t-butyl-o-cresol), butylated hydroxyanisol, phenol condensates, butylenated phenols, dialkyl phenol sulfides, high-molecular weight polyhydric phenols, bisphenols, etc.

As phosphorus antioxidants one can use, for example, aryl or alkylaryl phosphites such as tri(phenyl) phosphite, tri(nonylphenyl) phosphite, etc.

As amine antioxidants, one an use, for example, phenyl-α-naphthylamine, 4,4′-dioctyldiphenylamine, N,N′-di-β-naphthyl-p-phenylenediamine, N,N′-diphenyl-p-phenylenediamine, N-phenyl-N′-cyclohexyl-p-phenylenediamine, N,N′-di-o-tolyl-ethylenediamine, alkylated diphenylamine, etc.

In addition to the antioxidants named above, one can also use various commercial ones. Moreover, the antioxidants used may be ones which can be copolymerized with the monomer; concrete examples of such antioxidants are norbornenylphenol compounds such as 5-(3,5-di-t-butyl-4-hydroxybenzyl)-2-norbornene disclosed in the Japanese unexamined patent publication No. 57-83522.

The method for causing the antioxidant to be contained in the norbornene polymer is ordinarily to add it to the reaction raw material solution containing the norbornene monomer beforehand, under the polymerization conditions of the reaction injection molding method to be described below.

The butadiene elastomer used in this invention is a single 1,3-butadiene polymer or a copolymer the principal ingredient of which is 1,3-butadiene. Concrete examples of these are high cis-1,4-polybutadiene, low cis-1,4-polybutadiene, high vinyl polybutadiene, styrene-butadiene random copolymers, styrene-butadiene block copolymers, styrene-butadiene-styrene block copolymers, styrene-butadiene-styrene-butadiene block copolymers, etc. The compounding proportion of these butadiene elastomers may be selected according to the purpose for which the invention is to be used, but ordinarily it is 1-10 weight percent, preferably 3-8 weight percent, of the norbornene polymer. If this proportion is less than 1 weight percent, the Izod impact strength of the thermosetting machinable stock obtained will be smaller than 5 kg•cm/cm, and its impact strength will be insufficient. Moreover, the viscosity of the composite solution containing the norbornene monomer will be lower than 100 centipoise, and the solid slidability-imparting agent will readily precipitate. On the other hand, if the proportion is greater than 10 weight percent, the viscosity of the composite solution will become too high, and it will become disadvantageous for pouring into molds. Moreover, since the elastomer is thermoplastic, the thermosetting machinable stock obtained will tend to soften during cutting.

The slidability-imparting or anti-friction agent used in this invention may be graphite, carbon black, molybdenum disulfide, mica, ethylene tetrafluoride resin, ethylene tetrafluoride-propylene copolymers, glass fibers treated with ethylene tetrafluoride resin, graphite treated with ethylene tetrafluoride resin, polyethylene, polypropylene, polyethylene wax, polypropylene wax, silicone graphite polyethylene, silicone microcapsules, etc. These slidability-imparting agents may be in the form of powders or short fibers.

The proportion of the slidability-imparting agent compounded is ordinarily 0.1-50 weight percent, preferably 1-30 weight percent, and especially preferably 3-20 weight percent, of the norbornene polymer. If this proportion is too small, the effect of improving the slidability will be small, whereas if it is too great, there will be a possibility of adverse effects on the properties of the machinable stock.

In order to disperse the slidability-imparting agent uniformly in the reaction solution, the slidability-imparting agent and the raw material monomer may be mixed beforehand at a weight ratio of approximately 1:1 to approximately 2:1 and uniformly dispersed with a homogenizer, etc., to prepare a dispersion containing a high concentration of slidability-imparting agent, after which this may be used as a mother liquor.

In this invention, the norbornene monomer is subjected to a bulk ring opening polymerization in the presence of the antioxidant, butadiene elastomer, and slidability-imparting or anti-friction agent in order to obtain a machinable stock. If the process used is essentially bulk polymerization, it is acceptable, but not desirable, from the point of view of the performance of the stock, for inert solvents to be used in the preparation of the catalyst, also.

A desirable method for manufacturing the machinable stock is to divide the norbornene monomer into two parts and put them into separate vessels; the metathesis catalyst is added to one of them and the activating agent to the other. In this way, two stable reaction solutions are prepared. These two reaction solutions are mixed and then poured into a mold of a specific shape, where the block ring opening polymerization is performed. The antioxidant, butadiene elastomer, and slidability-imparting agent are added in specific quantities to at least one of the two solution.

In order to prevent the occurrence of so-called pores in the set material or machinable stock, cooling should be performed so that the mold temperature does not rise above the maximum setting exothermic temperature of the reaction product, 160°C. If the temperature is above this, an operation such as gradually cooling the set material is necessary. There is no special limit on the injection pressure, but pressures of 10 kg/cm$^2$ or less are ordinarily sufficient.

Any suitable polymerization may be selected, but it is ordinarily from about 2 minutes to one hour.

The ingredients used in the polymerization reaction should be stored and the operations should be performed under inert gas atmospheres, such as nitrogen gas. The mold may be sealed with an inert gas, but it need not be.

By compounding various additives, such as fillers, pigments, coloring agents, polymer modifiers, flame-retarding agents, etc., the properties of the machinable stock of this invention can be modified.

The additives can be mixed with one or both of the reaction solutions before the reaction is performed.

As fillers, inorganic fillers such as glass, carbon black, talc, calcium carbonate, mica, etc., can be used.

The machinable stock obtained in this way can be molded in various forms, such as round or square bars, tubes, sheets, etc., and can also be molded into specific three-dimensional forms. Furthermore, the molded articles are of high quality, essentially pore-free, with parts having diameters or thicknesses of 20 mm or more, preferably 50 mm or more. Since a reaction injection molding method is employed, they can be easily made large-scale, and, taking round bars as an example, one can manufacture such articles with diameters of about 300 mm or even more.

Furthermore, by "pores" in this case is meant ones which are discernible when the cut surface is examined by the naked eye; they have diameters of approximately 0.1 mm or more. By "essentially pore-free" is meant that when the machinable stock is cut at 100 mm intervals there are no pores on any surfaces. Such pores can also be discovered by subjecting the stock to 0.5-10 megahertz ultrasound waves and detecting turbulence in the reflected waves. Commercial ultrasound flaw detectors can be used for this purpose.

From the point of view of preventing thermal deformation during cutting, the glass transition temperatures of such machinable stocks must be at least 80°C, preferably at least 100°C, and especially preferably at least 130°C.

Moreover, the ignition point, measured by the high-pressure differential thermoanalysis method, is at least 120°C, preferably at least 130°C. The ignition point is measured by the high-pressure differential thermoanalysis method using a high-pressure differential thermal balance whereby a sample is frozen and pulverized under high-pressure oxygen and passed through a 100 mesh screen. Using 10 mg of the screened sample, the point at which a rapid rise in the differential heat curve is shown is defined as the ignition point. If the ignition point is low, discoloration due to a carbonization phenomenon occurs during cutting, the cut parts tend to be brittle, and spontaneous ignition is caused when the cut layer is left in direct sunlight or at high temperatures.

The machinable stock of this invention has a dynamic coefficient of friction of 0.2 or less, preferably 0.18 or less, and an Izod impact strength of 5 kg•cm/cm or more, preferably 7 kg•cm/cm or more. Furthermore, it is preferably for it to contain essentially no unreacted norbornene monomer or volatile solvents. These volatile ingredients volatilize during cutting and have a deleterious effect on the operating environment, as well as giving the molded articles an unpleasant odor after cutting. Therefore, the weight loss from heating at 400°C, with a temperature rise rate of 20°C/min in a nitrogen atmosphere, by the thermal balance method using a plate-shaped sample polymer of approximately 10 mg with diameter of 3-4 mm, should be 5 weight percent or less, especially 3 weight percent or less.

The machinable stock of this invention has good dimensional stability, since its water absorption ability is small, and its specific gravity is approximately 1.2 or less, so that it is an extremely light material, among plastics.

In this invention, this machinable stock can be molded to a desired shape by cutting with the same methods as are used with metal stock. The concrete means used for cutting are not especially limited, for example, one may use lathe finishing, screw cutting, mill cutting, perforating, reaming, etc.

When this machinable stock is cut, the stock is heated by friction; since excessive heating causes deformation and discoloration, the temperature should be controlled to 200°C or less.

Moreover, this machinable stock can be machined into various molded articles by cutting; concrete examples of these are parts such as axle bearings, gears, racks, cams, shafts, levers, bearings, pulleys, drive gears, rollers, flanges, wheels, friction parts, liners, buckets, washers, sliding plates, etc. These cut articles can be used in a wide range of fields, such as iron-working and metal machinery, construction machinery, textile industry machinery, transportation and hauling machinery, food processing machinery, and other general machinery.

## Actual Examples

This invention will be explained in more detail below by giving examples but it is not limited to these examples. Furthermore, the terms "parts" and "%", etc., are based on weight unless otherwise specified.

## Example 1

A mixture of 75% DCP and 25% cyclopentadiene trimers (a mixture of approximately 80% asymmetric type and approximately 20% symmetric type) was mixed with ethylene tetrafluoride resin powder (Ruburon L-5, Daikin Co.) as the slidability-imparting agent, at a ratio of 2:1, and dispersed for 30 minutes with a homogenizer, after which a mixture of DCP and cyclopentadiene trimer with the aforementioned ratio was added, obtaining a dispersion in which the ethylene tetrafluoride resin concentration was 10%. Two parts Irganox 1010 (Ciba-Geigy Co.), a phenol antioxidant, and 4 parts of the elastomers shown in Table 1 were dissolved in this dispersion per 100 parts of the dispersion.

This mixed solution was put into two vessels. Diethyl aluminum chloride (DEAC), n-propanol, and silicon tetrachloride were added to one of them, so that their respective concentrations with respect to the monomer were 33 millimoles, 42.9 millimoles, and 20 millimoles. Tri(tridecyl) ammonium molybdate was added to the other one so that its concentration was 4 millimoles with respect to the monomer.

The two reaction solutions were kept at 25°C, with a pot life approximately 10 minutes, and mixed by using gear pumps and a power mixer at a ratio of 1:1, after which they were poured into a jacketed steel mold with a water temperature kept at 18°C, with an inner diameter of 75 mm and a height of 800 mm. After pouring, setting began in approximately 20 minutes; 15 minutes after that, the mold was removed and a round bar machinable stock, i.e., round bar block, 75 mm diameter x 800 mm was obtained. This series of operations was performed under a nitrogen atmosphere. The maximum setting exothermic temperature of the reaction product was 150° C.

The properties, cutting abilities, and finished states of the products were investigated for the machinable stocks obtained in this way. The results are shown in Table 1. Furthermore, the ignition points of the machinable stocks of this invention were all 120° C or higher.

The methods for measuring and evaluating these properties were as follows:

Presence or absence of pores: The machinable stock was cut at intervals of 100 mm, and the cut surfaces were examined for the presence of pores with diameters of 0.1 mm or more; when there were no pores on the surfaces, the sample was judged as 0.

External appearance of cut surfaces: The aforementioned cut surfaces were examined, and those which showed uniform external appearances, with no unevenness of color, were judged as 0; those on which the slidability-imparting agent had coagulated, and which showed unevenness of color, were judged as X.

Chipping during cutting: The machinable stock was cut into pieces with a width of 50 mm and a height of 5 mm, and the presence or absence of defects on the edges was examined. Samples with no defects were judged as 0, those with some defects were judged as X, and those with defects in some parts were judged as triangle.

Production of cutting dust: When the machinable stock was cut, the samples which produced no dust were judged as 0 and the samples which caused dust to circulate in the air during cutting and worsened the operating environment were judged as X.

Ignition point: Part of the machinable stock was sampled, frozen, and pulverized, making a fine powder of 100 mesh or less. Ten mg of this powder were taken on an aluminum plate and measured with a high-pressure differential thermal analyzer. The point at which a rapid rise of the differential heat curve was shown was taken as the ignition point. The measurement conditions were 10 kg/cm$^2$ oxygen pressure and 20° C/min temperature rise rate.

Dynamic coefficient of friction: The measurement was performed according to JIS K7125. Opposing material: SUS304; rate: 100 mm/min; load: 2030 g.

The various elastomers used are shown in Table 1.

SBS: Styrene-butadiene-styrene block copolymer (Tafupuren-A, Asahi Kasei Co.)
BR: High cis-1,4-polybutadiene (BR-1220, Nippon Zeon Co.)
SBR: Styrene-butadiene random copolymer (NS-210, Nippon Zeon Co.)
SIS: Styrene-isoprene-styrene block copolymer (Quintack 3421, Nippon Zeon Co.)
IR: Polyisoprene (Nippol IR-2200, Nippon Zeon Co.)
EPDM: Ethylene-propylene-diene terpolymer (EPT-3090E, Mitsui Petrochemical Co.)

Table 1

|  | | Examples of this invention | | | Comparison Examples | | |
|---|---|---|---|---|---|---|---|
| Experiment No. | | 1 | 2 | 3 | 4 | 5 | 6 |
| Compounding formulas | | | | | | | |
| Monomer (DCP/CP trimer = 75/25)<br>Elastomer (4 parts)<br>Ethylene tetrafluoride resin powder (parts) | | 90<br>SBS<br>10 | 90<br>BR<br>10 | 90<br>SBR<br>10 | 90<br>SIS<br>10 | 90<br>IR<br>10 | 90<br>EPDM<br>10 |
| Evaluated items | | | | | | | |
| Presence or absence of pores<br>External appearance of cut surfaces<br>Chipping during cutting<br>Production of cutting dust | | O<br>O<br>O<br>O | O<br>O<br>O<br>O | O<br>O<br>O<br>O | O<br>X<br>-<br>- | O<br>X<br>-<br>- | O<br>X<br>-<br>- |
| Properties | | | | | | | |
| Glass transition temperature Tg ($^\circ$C)<br>Izod impact strength (notched, kg•cm/cm)<br>Dynamic coefficient of friction | | 170<br>8.5<br>0.16 | 168<br>8.4<br>0.15 | 170<br>8.8<br>0.15 | -<br>-<br>- | -<br>-<br>- | -<br>-<br>- |
| Experiments Nos. 4, 5 and 6 had clearly non-uniform qualities from the results of observing the appearance of the cut surfaces; therefore, the subsequent evaluation and property measurements were omitted. | | | | | | | |

As can be seen from Table 1, when butadiene elastomers were used as the elastomer, there was no chipping or flying of cutting powder, and the operating environment was not worsened; in addition, the impact strength and friction properties of the machinable stock were excellent.


Example 2


Machinable stocks were made in the same manner as in Example 1, except that the kinds of elastomers and slidability-imparting agents and the compounding quantities were varied as shown in Table 2.

The properties, cutting ability, and finished condition of the products were investigated. The results are shown in Table 2. Furthermore, the ignition points of this actual example were all 120 $^\circ$C or higher.

From Table 2, it can be seen that by using butadiene elastomers and slidability-imparting agents together, the slidability and impact strength were improved and excellent machinable stocks were obtained with no production of chipping or cutting dust.

Table 2

| | Examples of this invention | | | | | Comparison examples | |
|---|---|---|---|---|---|---|---|
| Experiment No. | 7 | 8 | 9 | 11 | 12 | 13 | 14 |
| Compounding formulas | | | | | | | |
| Monomer (DCP/CP trimer = 75/25) | 90 | 95 | 85 | 90 | 90 | 100 | 100 |
| SBS | 2 | 4 | 4 | 6 | 4 | 4 | - |
| Ethylene tetrafluoride resin powder (parts) | 10 | 5 | 15 | 10 | - | - | - |
| Graphite (4 parts) | - | - | - | - | 10 | - | - |
| Evaluated items | | | | | | | |
| Presence or absence of pores | O | O | O | O | O | O | O |
| External appearance of cut surfaces | O | O | O | O | O | O | O |
| Chipping during cutting | O | O | O | O | O | O | triangle |
| Production of cutting dust | O | O | O | O | O | O | X |
| Properties | | | | | | | |
| Glass transition temperature Tg (°C) | 170 | 167 | 168 | 165 | 172 | 168 | 170 |
| Izod impact strength (notched, kg·cm/cm) | 6.2 | 10.5 | 8.0 | 10.3 | 7.5 | 13.0 | 3.5 |
| Dynamic coefficient of friction | 0.17 | 0.18 | 0.15 | 0.15 | 0.17 | 0.27 | 0.28 |

The machinable stock according to this invention is light-weight and excellent in heat resistance and dimensional stability. In addition, it has improved slidability and impact resistance. Moreover, it causes neither damage to edges nor flying of cutting dust when cut.

**Claims**

1. Pore-free thermosetting polymer having a thick section of 20 mm or more comprising ring-opened norbornene polymer derived from a norbornene monomer having tricyclic or higher cyclic structure polymerized by means of a metathesis catalyst system, an effective amount of an antioxidant to stabilize oxidation therein, an effective amount of a butadiene-containing elastomer to obtain an Izod impact strength of at least 5 kg·cm/cm, and an effective amount of an anti-friction agent to obtain coefficient of dynamic friction of not greater than 0.2.

2. Polymer of claim 1 wherein said polymer has ignition point of at least 130°C, Tg of at least 100°C, Izod impact strength of 7 kg·cm/cm or more, and coefficient of dynamic friction of 0.18 or less.

3. Polymer of claim 2 wherein said norbornene monomer includes a predominant amount of dicyclopentadiene and a smaller amount of a mixture of cyclopentadiene trimers.

4. Polymer of claim 2 wherein said antioxidant is selected from the group consisting essentially of phenolic antioxidants, phosphoric antioxidants, amine antioxidants, and mixtures thereof; said anti-friction agent is selected from the group consisting essentially of graphite, carbon black, molybdenum disulfide, mica, ethylene tetrafluoride resin, ethylene tetrafluoride-propylene copolymers, glass fibers treated with ethylene tetrafluoride resin, graphite treated with ethylene tetrafluoride resin, polyethylene, polypropylene, polyethylene wax, polypropylene wax, silicone graphite polyethylene, silicone microcapsules, and mixtures thereof; said elastomer is selected from the group consisting essentially of polybutadiene, high vinyl polybutadiene, styrene-butadiene random copolymers, styrene-butadiene block copolymers, styrene-butadiene-styrene block copolymers, styrene-butadiene-styrene-butadiene block copolymers, and mixtures thereof; and said norbornene monomer is selected from the group consisting essentially of tricyclic monomers, tetracyclic monomers, pentacyclic monomers, and mixtures thereof.

5. Polymer of claim 4 wherein amount of the antioxidant is 0.5-2 weight percent, based on the weight of neat norbornene polymer; amount of said anti-friction agent is 1-30 weight percent, based on the weight of neat norbornene polymer; and amount of said elastomer is 1-10 weight percent, based on the weight of neat norbornene polymer.

6. Polymer of claim 5 wherein said thick section is 50 mm or more; and wherein said catalyst system includes a catalyst component and a cocatalyst component, said catalyst component is selected from organoammonium molybdates and organoammonium tungstates and said cocatalyst component is selected from alkoxyalkylaluminum halides.

7. Polymer of claim 1 having at least one machined surface.

8. Polymer of claim 3 having at least one machined surface.

9. Polymer of claim 5 having at lest one machined surface.

10. Polymer of claim 6 having at least one machined surface.